# EUROPÄISCHE PATENTANMELDUNG

(11) **EP 1 211 120 A1**
(43) Veröffentlichungstag der Anmeldung: **05.06.2002**
(21) Anmeldenummer: 01126748.1
(22) Anmeldetag: 09.11.2001
(51) Int. Cl.: B60L 11/18

(54) **Vorrichtung und Verfahren zum Starten eines Fahrzeugs**

(30) Priorität: 30.11.2000 DE 10059416
(71) Anmelder: XCELLSIS GmbH, 73230 Kirchheim/Teck-Nabern (DE)
(72) Erfinder: Benz, Uwe, 88690 Uhldingen-Mühlhofen (DE); Graage, Klaus, 73230 Kirchheim/Teck (DE); Hornburg, Gerald, 73271 Holzmaden (DE); Sonntag, Josef, 73230 Kirchheim/Teck (DE); Zur Megede, Detlef, Dr., 73230 Kirchheim/Teck (DE)
(74) Vertreter: Kaufmann, Ursula Josefine, Dr.rer.nat. Dipl.-Phys.

(57) **Zusammenfassung**

Vorrichtung zum Starten eines insbesondere mittels eines Brennstoffzellensystems betriebenen Fahrzeugs, mit Mitteln zum beliebigen Einleiten eines Startvorgangs des Brennstoffzellensystems oder einer Startvorbereitung des Fahrzeugs unabhängig von einer Anwesenheit eines Fahrers in unmittelbarer Nähe des Fahrzeugs, insbesondere innerhalb des Fahrzeugs.

## Beschreibung

Die vorliegende Erfindung betrifft eine Vorrichtung und ein Verfahren zum Starten eines Fahrzeugs nach dem Oberbegriff des Patentanspruchs 1.

Aus einem Artikel von P. Agarwal in IEEE Transactions on Power Apparatus and Systems, 88 (1969) 2, Seiten 86 bis 93, ist ein Fahrzeug bekannt, das von einem Elektromotor, der mit Hilfe von Brennstoffzellen mit elektrischer Energie versorgt wird, angetrieben wird.

Außerdem ist aus der DE 41 01 795 A1 ein Brennstoffzellen-System zur Verwendung in einem Fahrzeug bekannt, in dessen Zuführleitung ein Kompressor zur Verdichtung des Oxidant-Massenstromes angeordnet ist.

Schließlich ist aus der DE 43 22 767 C2 eine Vorrichtung zum Starten eines Fahrzeugs mit einer elektrischen Antriebseinheit, die von einer Brennstoffzelle mit elektrischer Energie versorgt wird, bekannt. Hierbei ist in der Zuführleitung der Brennstoffzelle ein Kompressor zur Verdichtung des Oxidant-MAssenstroms angeordnet, und zum Antrieb des Kompressors ein Elektromotor und ein Anlassermotor vorgesehen. Der Anlassermotor wird von einer Starterbatterie, und der Elektromotor von der Brennstoffzelle mit Spannung versorgt.

Bei den bisher entwickelten, mittels Brennstoffzellen angetriebenen Fahrzeugen, welche einen zum Betrieb der Brennstoffzellen notwendigen Wasserstoff mittels eines an Bord befindlichen Reformers erzeugen, sind die auftretenden Startzeiten, d. h. die Zeiten vom Start des Systems bis zum eigentlichen Anfahren des Fahrzeugs, inakzeptabel hoch. Dies liegt unter anderem darin begründet, daß die einzelnen Komponenten des Brennstoffzellensystems, insbesondere ein verwendeter Reformer oder auch die Brennstoffzellen selbst, erst auf eine bestimmte Betriebstemperatur gebracht werden müssen.

Aufgabe der Erfindung ist es, Wartezeiten für einen Benutzer, bei denen dieser bereits im Fahrzeug Platz genommen hat und auf die Möglichkeit zum Anfahren wartet, zu verkürzen.

Diese Aufgabe wird gelöst durch eine Vorrichtung mit den Merkmalen des Patentanspruchs 1 sowie ein Verfahren mit den Merkmalen des Patentanspruchs 5.

Erfindungsgemäß ist nun die Möglichkeit geschaffen, einen Befehl zum Start des Brennstoffzellensystems räumlich und/oder zeitlich von der Anwesenheit des Fahrers, insbesondere von einer Anwesenheit im Fahrzeug, zu entkoppeln. Hierdurch läßt sich eine Wartezeit für den Fahrer zwischen Einleiten eines Startvorgangs und einer Betriebsbereitschaft des Kraftfahrzeugs verringern Es ist ebenfalls mittels der vorgeschlagenen Erfindung möglich, eine Startvorbereitung für weitere Komponenten des Kraftfahrzeugs einzuleiten. Unter Startvorbereitung wird hierbei insbesondere die Inbetriebnahme einer APU (Auxiliary Power Unit) verstanden, welche die Bordnetzversorgung noch vor dem Einsteigen in das Fahrzeug übernimmt und z. B. das Fahrzeuginnere oder Fahrzeugteile, beispielsweise Sitze, Scheiben, Lenkrad, auf eine gewünschte Temperatur einstellt.

Vorteilhafte Ausgestaltungen der erfindungsgemäßen Vorrichtung bzw. des erfindungsgemäßen Verfahrens sind Gegenstand der Unteransprüche.

Gemäß einer ersten bevorzugten Ausgestaltung der erfindungsgemäßen Vorrichtung weisen die Mittel zum Einleiten des Startvorgangs eine drahtlose Fernbedienung, insbesondere eine Infrarot-Fernbedienung, und eine.entsprechende Einrichtung zum Empfang von Fernbedienungssignalen und zum Einleiten des Startvorgangs des Brennstoffzellensystems auf. Eine derartige Infrarotbedienung kann beispielsweise ähnlich der bereits bekannten ferngesteuerten Zentralverriegelungen ausgestaltet sein. Es ist ebenfalls möglich, eine drahtlose Verbindung mit bezüglich des Fahrzeuges externen oder internen Geräten, die üblicherweise kurz vor dem Start des Fahrzeugs betätigt oder benutzt werden, zur Verfügung zu stellen. Hier seien als Beispiel ein Garagentor, ein Garagenlicht, ein Wecker, eine Türschloß-Zentralverriegelung oder ein Sicherheitsgurt genannt. Beispielsweise ist es denkbar, bei Betätigung eines Garagentores eine drahtlose Verbindung zwischen einem mit dem Garagentor in Wirkverbindung stehenden Sender und einem mit dem Brennstoffzellensystem in Wirkverbindung stehenden Empfänger herzustellen.

Gemäß einer weiteren bevorzugten Ausgestaltung der Erfindung ist eine Zeitschaltuhr vorgesehen, über welche der Zeitpunkt des nächsten gewünschten Startes des Fahrzeugs eingebbar ist. Eine derartige Zeitschaltuhr kann beispielsweise im Fahrzeug angeordnet sein, oder alternativ hierzu über Datenfernübertragungsmittel mit entsprechenden Empfängereinrichtungen zusammenwirken.

Gemäß einer weiteren bevorzugten Ausgestaltung sind Mittel zur Verbindung einer Einrichtung zum Einleiten des Startvorgangs des Brennstoffzellensystems mit einem Telekommunikationsnetz, insbesondere GSM oder Internet, vorgesehen. Über derartige Mittel ist es möglich, den Startvorgang beispielsweise über Mobiltelefon oder über eine Internetverbindung einzuleiten oder zu programmieren.

Ferner ist es zweckmäßig, nach dem Einleiten eines Startvorgangs des Brennstoffzellensystems eine Überführung in einen Standby- bzw. Warmhaltemodus zur Verfügung zu stellen. Dies erweist sich insbesondere dann als vorteilhaft, wenn zwischen dem Startbefehl und dem eigentlichen Anfahren des Kraftfahrzeugs beispielsweise aufgrund unvorhersehbarer Ereignisse eine länger als ursprünglich erwartete Zeit liegt.

Eine Fernbedienung über Mobiltelefon bzw. Internet/E-mail läßt sich so ausführen, daß der momentane Betriebszustand über diese Medien frei einstellbar ist. Beispielsweise ließe sich über Mobiltelefon oder Internet ein Zustand "Warmhalten" stoppen, wenn der Fahrer sich entscheidet, das Fahrzeug für längere Zeit nicht zu benutzen, aber gerade nicht am Ort des Fahrzeugs ist. Ebenfalls kann das Fahrzeug seinerseits "Anfragen", ob ein bestimmter Betriebszustand gewünscht ist, beispielsweise ist es denkbar, nach einem länger andauernden Warmhalten bei Stillstand des Fahrzeugs eine Anfrage an den Fahrer zu richten, ob ein weiteres Warmhalten oder ein Auskühlen des Systems gewünscht ist.

Die erwähnten Funktionen können mit einer selbstlernenden Funktionalität ausgebildet sein, welche sich dem Fahrerprofil anpaßt, bzw. bei untypischem Fahrerverhalten entsprechende Anfragen an den Fahrer generiert.

Die erfindungsgemäß zur Verfügung gestellte Möglichkeit eines ferngesteuerten und/oder zeitlich programmierbaren bzw. vorprogrammierbaren Starts kann zu einer Verringerung der Anforderungen an das Startverhalten eines Brennstoffzellensystems führen, d. h. insgesamt zu Kosteneinsparungen, eventuell zu geringeren Emissionen, geringeren Materialbelastungen (beispielsweise durch thermische Spannungen) und einem geringeren Kraftstoffverbrauch.

Die Erfindung wird nun anhand der beigefügten Zeichnung weiter erläutert. In dieser zeigt:
- Fig. 1: ein schematisch vereinfachtes Blockschaltbild zur Erläuterung wesentlicher Komponenten der erfindungsgemäßen Vorrichtung, und
- Fig. 2: ein stark vereinfachtes Flußdiagramm zur Darstellung wesentlicher Schritte des erfindungsgemäßen Verfahrens.

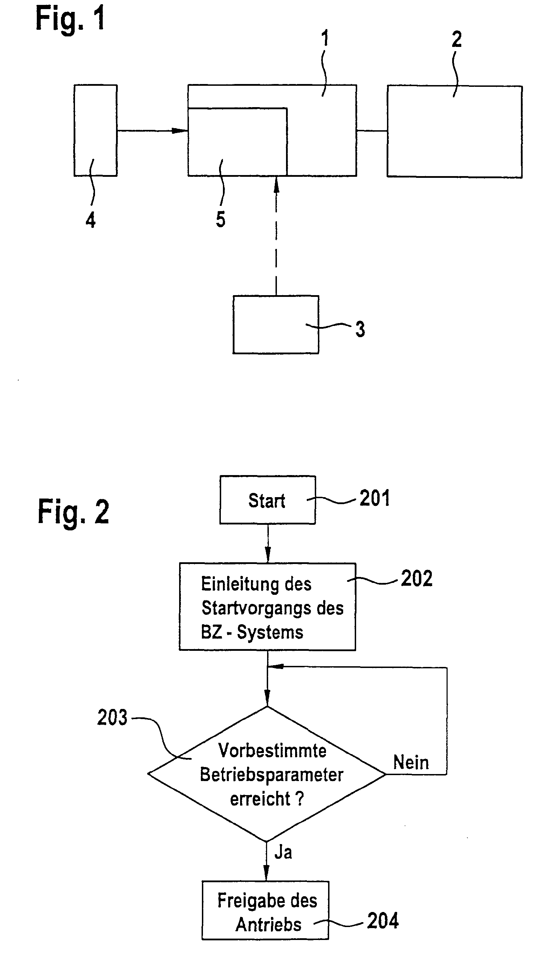

In Fig. 1 ist mit 1 ein Brennstoffzellensystem und mit 2 ein mit dem Brennstoffzellensystem 1 in Wirkverbindung stehender Fahrzeugantrieb bezeichnet. Eine Freigabe des Antriebs 2 ist erst dann möglich, wenn das Brennstoffzellensystem nach Durchführen eines Startvorgangs bestimmte Betriebsparameter eingenommen hat. Es seien beispielsweise Betriebstemperatur oder Leerlaufleistung genannt.

Mit 3 ist eine Einrichtung zum drahtlosen Einleiten des Startvorgangs des Brennstoffzellensystems 1 dargestellt. Bei dieser Einrichtung 3 kann es sich beispielsweise um eine Infrarot-Fernbedienung handeln. Die Infrarot-Fernbedienung 3 kann zum Einleiten des Startvorgangs des Brennstoffzellensystems 1 betätigt werden, noch bevor der Fahrer bzw. Benutzer des Fahrzeugs im Fahrzeug Platz genommen hat. Dies bedeutet, daß der Fahrer nicht die gesamte Zeit, die das Fahrzeug für den Startvorgang benötigt, im Wagen warten muß. Da sich herkömmlicherweise Startzeiten von über 30 Sekunden ergeben, ist hierdurch der Benutzercomfort gegenüber herkömmlichen Lösungen stark verbessert.

Mit 4 ist schließlich eine mit dem Brennstoffzellensystem 1 in Wirkverbindung stehende Zeitschaltuhr bezeichnet. Diese Zeitschaltuhr 4 kann insbesondere innerhalb des Kraftfahrzeugs angeordnet sein, so daß der Fahrer beispielsweise vor dem Aussteigen den Zeitpunkt eines gewünschten nächsten Starts eingeben kann.

Die Einrichtungen 3, 4 wirken zweckmäßigerweise mit einer einen Teil des Brennstoffzellensystems darstellenden Einrichtung 5 zusammen; welche Empfangsmittel zum Empfang der jeweiligen Signale der Einrichtungen 3 bzw. 4 aufweist. Die Einrichtung 5 weist ferner Mittel zur Generierung von entsprechenden Startsignalen zum Start des Brennstoffzellensystem auf. Es ist denkbar, die Einrichtung 5 mit Empfangsmitteln für Internet- oder Mobilfunkdaten auszubilden.

Eine bevorzugte Ausführungsform des erfindungsgemäßen Verfahrens wird nun anhand der Fig. 2 erläutert. Dieses Verfahren wird durch Betätigen der Infrarot-Fernbedienung 3 innerhalb des Brennstoffzellensystems 1 mittels einer nicht gezeigten Steuereinrichtung gestartet (Schritt 201). Das Verfahren kann jedoch auch dann gestartet werden, wenn das Brennstoffzellensystem 1 erkennt, daß ein externes oder internes Gerät, das üblicherweise kurz vor einem Start des Fahrzeugs betätigt oder benutzt wird, tatsächlich betätigt wurde.

In einem anschließenden Schritt 202 wird dann der Start des Brennstoffzellensystems eingeleitet. Beispielsweise wird ein dem Brennstoffzellensystem zugeordneter bzw. vorgeschalteter Reformer auf Betriebstemperatur gebracht. Wird in einem Schritt 203 festgestellt, daß vorbestimmte Betriebsparameter, welche zum fehlerfreien Betrieb des Brennstoffzellensystems notwendig sind, erreicht wurden, wird der mit dem Brennstoffzellensystem in -Wirkverbindung stehende Antrieb des Fahrzeugs freigegeben (Schritt 204).

## Patentansprüche

1. Vorrichtung zum Starten eines insbesondere mittels eines Brennstoffzellensystems (1) betriebenen Fahrzeugs,
**gekennzeichnet durch,**
Mittel (3, 4, 5) zum beliebigen Einleiten eines Startvorgangs des Brennstoffzellensystems oder einer Startvorbereitung des Fahrzeugs unabhängig von einer Anwesenheit eines Fahrers in unmittelbarer Nähe des Fahrzeugs, insbesondere innerhalb des Fahrzeugs.

2. Vorrichtung nach Anspruch 1,
**dadurch gekennzeichnet,**
**daß** die Mittel (3, 4) zum Einleiten des Startvorgangs oder der Startvorbereitung drahtlos, insbesondere in Form einer Infrarot-Fernbedienung ausgebildet sind, wobei die Mittel mit einem entsprechenden, mit dem Brennstoffzellensystem (1) in Wirkverbindung stehenden Empfänger zum Empfang von Signalen zur Einleitung des Startvorgangs ausgebildet sind.

3. Vorrichtung nach einem der Ansprüche 1 oder 2,
**gekennzeichnet durch**
eine Zeitschaltuhr (4), über welche der Zeitpunkt eines nächsten gewünschten Startes des Brennstoffzellensystems (1) bzw. Fahrzeugs eingebbar ist.

4. Vorrichtung nach einem der vorstehenden Ansprüche,
**gekennzeichnet durch**
Mittel zur Verbindung einer Einrichtung (5) zum Einleiten des Startvorgangs des Brennstoffzellensystems mit einem Telekommunikationsnetz, insbesondere GSM oder Internet.

5. Verfahren zum Starten eines insbesondere mittels eines Brennstoffzellensystems (1) betriebenen Fahrzeugs, bei welchem ein beliebiges Einleiten eines Startvorgangs des Brennstoffzellensystems (1) oder einer Startvorbereitung des Kraftfahrzeugs unabhängig von einer Anwesenheit des Fahrers des Fahrzeugs in unmittelbarer Nähe des Fahrzeugs, insbesondere innerhalb des Fahrzeugs, durchführbar ist.

6. Verfahren nach Anspruch 5,
**dadurch gekennzeichnet,**
**daß** nach dem Abschluß eines Startvorgangs des Brennstoffzellensystems (1) dieses in einen Standby- bzw. Warmhaltezustand überführbar ist.
